# EUROPÄISCHE PATENTANMELDUNG

(11) **EP 4 375 011 A1**
(43) Veröffentlichungstag der Anmeldung: **29.05.2024**
(21) Anmeldenummer: 23209309.6
(22) Anmeldetag: 13.11.2023
(51) Int. Cl.: B24B 5/18, B24B 5/22, B24B 5/32

(54) **SCHLEIFMASCHINE FÜR SPINNZYLINDER**

(30) Priorität: 25.11.2022 CH 14132022
(71) Anmelder: Bräcker AG, 8330 Pfäffikon (CH)
(72) Erfinder: WIDMER, Felix, 8404 Winterthur (CH); DIPPEL, Markus, 8330 Pfäffikon (CH)
(74) Vertreter: Rieter

(57) **Zusammenfassung**

Die Erfindung betrifft eine Schleifmaschine (1) zum Schleifen von Spinnzylindern (4) einer Oberwalze (3) von faserverarbeitenden Maschinen mit einem Vorlagemagazin (9) und einem Ablagemagazin (11) und einem Bearbeitungsmodul (10), wobei das Bearbeitungsmodul (10) zumindest eine Messvorrichtung (13) und eine Schleifvorrichtung (14) mit zumindest einer Schleifscheibe (15) und einer Schleifachse (16) aufweist. Im Bearbeitungsmodul (10) ist zum Transport der Oberwalzen (3) durch das Bearbeitungsmodul (10) ein Revolver (17) mit einer Drehachse (18) vorgesehen, wobei die Drehachse (18) des Revolvers (17) parallel zur Schleifachse (16) angeordnet ist. Der Revolver (17) weist an seinem Umfang zumindest drei Klemmstellen () zur Arretierung der Oberwalze (3) am Revolver (17) auf.

## Beschreibung

Die Erfindung betrifft eine Schleifmaschine für Spinnzylinder zum Schleifen von Spinnzylindern einer Oberwalze von faserverarbeitenden Maschinen.

Aus dem Stand der Technik sind verschiedene Ausführungen von derartigen Schleifmaschinen bekannt. Spinnzylinder sind in der Regel paarweise drehbar auf einem Achsbolzen zu einer Oberwalze verbaut. In verschiedenen faserverarbeitenden Maschinen wie beispielsweise Strecken, Flyern, Ringspinnmaschinen oder Luftspinnmaschinen werden zur Verstreckung von Faserbändern Streckwerke eingesetzt. Die Streckwerke werden gebildet aus mehreren hintereinander angeordneten und mit unterschiedlichen Drehzahlen betriebenen Walzenpaaren. Dabei wird das zwischen den Walzenpaaren durchlaufende Faserband einem Verzug ausgesetzt. Die Walzenpaare bestehen aus einer Unterwalze und einer Oberwalze, wobei die Unterwalze meist eine Stahlwalze ist und die Oberwalze mit Spinnzylindern versehen ist, welche einen elastischen Bezug aufweisen. Während des Betriebes wird der Bezug durch die durchlaufenden Faserbänder abgenutzt, wobei der Bezug seine zylindrische Form verliert und eine einwandfreie Zusammenarbeit mit der zugehörigen Unterwalze verloren geht. Deshalb müssen die Spinnzylinder, respektive deren Bezüge, periodisch geschliffen werden. Bei diesem Schleifvorgang wird die oberste Schicht des Bezuges abgetragen und die ursprüngliche, beispielsweise zylindrische Form des Bezuges wieder hergestellt.

Beispielsweise offenbar die EP 2 083 965 B1 eine Schleifmaschine für Spinnzylinder von Oberwalzen mit einem Vorlagemagazin, einem Ablagemagazin und einem Bearbeitungsmodul. Es ist bekannt bei Schleifmaschinen Vorlagemagazine und Ablagemagazine zu verwenden, um die zu schleifenden Spinnzylinder nicht einzeln manuell an die Schleifmaschine verbringen zu müssen. Verschiedenartige Bauarten von Magazinen finden Anwendung, beispielsweise ist das Vorlagemagazin durch ein Rundmagazin mit einer Vielzahl von radial zu einem Drehzentrum angeordneten Führungen oder durch ein Rechteckmagazin mit einer Vielzahl von übereinander gestapelten und an ihren Enden verbundenen Führungen oder durch ein Etagenmagazin gebildet. Das Bearbeitungsmodul weist eine Schleifvorrichtung und einen Drehtisch auf. Vom Vorlagemagazin werden die Oberwalzen auf dem Drehtisch arretiert und ortsfest festgehalten. Nach einer Drehung des Drehtisches gelangt die Oberwalze an eine Position im Bereich der Schleifvorrichtung. Die Bezüge der Spinnzylinder der Oberwalze werden geschliffen und anschliessend der Drehtisch weitergedreht, sodass die geschliffenen Spinnzylinder der Oberwalze in das Abgabemagazin übergeben werden können. Durch die waagerechte Ausführung des Drehtisches ergibt sich die Schwierigkeit, dass bei einer Drehung des Drehtisches die Position der Oberwalze, respektive der Haltevorrichtung mit der Oberwalze, entsprechend den Bearbeitungs- oder Handlingsgeräten verändert werden muss, um eine kollisionsfreie Drehung des Drehtisches zu ermöglichen. Weiter ist die Vorrichtung zur Halterung der Oberwalzen auf dem Drehtisch kompliziert, um eine exakte Positionierung der Oberwalzen zu erreichen. Auch muss der horizontal angeordnete Drehtisch während des Schleifprozesses durch zusätzliche Elemente abgestützt werden, um den Andruckkräften der Schleifvorrichtung entgegenzuwirken.

Weiter offenbart die DE 10 2009 006 965 A1 eine Schleifmaschine, bei welcher die Oberwalzen der Schleifvorrichtung einzeln zu- und abgeführt werden. Diese Verfahrensweise ergibt einen hohen Zeitaufwand für das Schleifen einer Oberwalze bedingt durch eine manuelle Bedienung oder einer entsprechend hohen Anzahl an Handlingsgeräten.

Die Aufgabe der Erfindung ist es demnach eine Schleifmaschine vorzuschlagen, welche einen hohen Automatisierungsgrad bei einer möglichst einfachen Konstruktion und damit einer Minimierung einer Zykluszeit für einen Schleifvorgang ermöglicht.

Die Aufgabe wird gelöst durch eine Schleifmaschine mit den Merkmalen des unabhängigen Anspruchs. Zur Lösung der Aufgabe wird eine Schleifmaschine zum Schleifen von Spinnzylindern einer Oberwalze von faserverarbeitenden Maschinen vorgeschlagen, wobei die Schleifmaschine ein Vorlagemagazin und ein Ablagemagazin und ein Bearbeitungsmodul aufweist. Das Bearbeitungsmodul weist zumindest eine Messvorrichtung und eine Schleifvorrichtung mit zumindest einer Schleifscheibe und einer Schleifachse auf. Im Bearbeitungsmodul ist zum Transport der Oberwalzen durch das Bearbeitungsmodul ein Revolver mit einer Drehachse vorgesehen, wobei die Drehachse des Revolvers parallel zur Schleifachse angeordnet ist. Der Revolver weist an seinem Umfang zumindest drei Klemmstellen zur Arretierung der Oberwalzen am Revolver auf. Der Revolver hat den Vorteil, dass an mehreren Oberwalzen gleichzeitig Arbeiten respektive Manipulationen ausgeführt werden können. Die Klemmstellen sind gleichmässig über den Umfang es Revolvers verteilt und der Revolver wird dabei derart geschaltet, dass jeweils eine der drei Klemmstellen an einer Übernahmeposition, einer Schleifposition und einer Abgabeposition ist. An der Übernahmeposition wird eine Oberwalze vom Vorlagemagazin in die Klemmstelle übernommen. Gleichzeitig werden die in der Klemmstelle in der Schleifposition gehaltenen Spinnzylinder geschliffen. Und ebenfalls zur selben Zeit wird die geschliffene Oberwalze an der Abgabeposition aus der Klemmstelle in das Abgabemagazin entlassen. Sobald alle drei Operationen beendet sind, wird der Revolver um 120 Grad gedreht, wodurch
- die nach der Abgabe der Oberwalze leere Klemmstelle in die Übernahmeposition
- die nach der Übernahme in der Klemmstelle befindliche Oberwalze in die Schleifposition und
- die fertig geschliffene Oberwalze in Abgabeposition
überführt werden.

In der Messvorrichtung werden die aktuellen Durchmesser der Spinnzylinder vor dem Schleifen gemessen. Durch eine Messung der Durchmesser können die Oberwalzen respektive deren Spinnzylinder individuell geschliffen werden. Ohne Messvorrichtung würden alle Spinnzylinder auf einen festgelegten Normdurchmesser geschliffen, auch wenn dies nicht bei allen Oberwalzen notwendig wäre oder dazu führen würde, dass ein zu geringer Abtrag einer verschlissenen Oberfläche erreicht würde. In einer ersten Betriebsweise kann dadurch, dass der aktuelle Durchmesser eines zu schleifenden Spinnzylinders bekannt ist, die Schleifscheibe exakt an den Spinnzylinder zugestellt werden, sodass ein möglichst grosser Durchmesser des Spinnzylinders nach dem Schleifen erhalten bleibt. Damit wird eine wesentliche Laufzeitverlängerung der einzelnen Oberwalzen erreicht. Auch ist es nicht notwendig Oberwalzen mit gleicher Betriebsdauer gemeinsam zu schleifen, da eine für eine Erneuerung einer Oberfläche der Spinnzylinder notwendige Schleiftiefe bei jeder in die Schleifposition gelangende Oberwalze individuell eingestellt wird. In einer weiteren Betriebsweise werden die Spinnzylinder auf einen festgelegten Solldurchmesser geschliffen und dadurch, dass der aktuelle Durchmesser eines zu schleifenden Spinnzylinders bekannt ist, kann festgestellt werden, ob eine vorgegebene Schleiftiefe durch den Schleifvorgang erreicht wird.

Bevorzugterweise ist die Messvorrichtung zwischen dem Vorlagemagazin und dem Revolver vorgesehen. Dadurch wird ermöglicht die Spinnzylinder auf ihrem Weg zur Klemmstelle in der Übernahmeposition zu messen und keine zusätzliche Position des Revolvers für die Messung der Durchmesser der Spinnzylinder vorzusehen. Für die Übernahme der Oberwalzen aus dem Vorlagemagazin sind Übernahmeführungen und abhängig von der Bauart des Vorlagemagazins auch Hebevorrichtungen aus dem Stand der Technik bekannt. Eine Messung des Durchmessers kann dabei beispielsweise auf der Übernahmeführung von einer Hebevorrichtung zur Klemmstelle mechanisch oder optisch, wie bereits in bestehenden Schleifmaschinen üblich, erfolgen.

Bevorzugterweise weist der Revolver an seinem Umfang vier Klemmstellen auf. Bedingt durch die vierte Klemmstelle durchläuft die Klemmstelle, respektive die in der Klemmstelle gehaltene Oberwalze, eine zweite Bearbeitungsposition zwischen der Übernahmeposition und der Übergabeposition. Nach der Übernahmeposition, an welcher die Oberwalze der Klemmstelle des Revolvers zugeführt wird, und nach der Schleifposition folgt nach einer weiteren Vierteldrehung des Revolvers eine Ausschussposition. In der Ausschussposition werden diejenigen Oberwalzen durch Lösen der Klemmstelle über eine Ausschussführung in einen unterhalb des Revolvers angeordneten Ausschussbehälter abgeworfen. Als Ausschuss werden abhängig von der Betriebsweise durch eine Steuerung diejenigen Oberwalzen bestimmt, bei welchen ein Schleifvorgang nicht mehr möglich ist oder eine notwendigen Schleiftiefe nicht erreicht werden kann aufgrund des gemessenen Durchmessers der Spinnzylinder. Um in einer faserverarbeitenden Maschine ihrer Bestimmung gemäss als Oberwalzen genutzt werden zu können, ist ein minimaler Durchmesser der Spinnzylinder notwendig. In einer ersten Betriebsweise werden ein Solldurchmesser der Spinnzylinder, auf welchen die Spinnzylinder zu schleifen sind, und eine notwendige minimale Schleiftiefe durch das Bedienpersonal festgelegt. Die Schleiftiefe entspricht demjenigen Betrag, welcher von einer Oberfläche der Spinnzylinder weggeschliffen werden muss, um eine in ihren geometrischen und materialabhängigen Eigenschaften einwandfreie Oberfläche zu erreichen. Beispielsweise wird häufig eine Schleiftiefe von 0.2 mm ausgeführt, welche in der Regel genügt, um Einlaufriefen und Verhärtungen in den Oberflächen der gebrauchten Spinnzylinder wegzuschleifen. Wird nun zur Erreichung des vorgegebenen Durchmessers durch den Schleifvorgang aufgrund des gemessenen Durchmessers die Schleiftiefe rechnerisch nicht erreicht, entscheidet die Steuerung den Schleifvorgang nicht durchzuführen und die entsprechende Oberwalze in der Ausschussposition durch Lösen der Klemmstelle in den Ausschussbehälter zu überführen. In einer zweiten Betriebsweise wird durch das Bedienpersonal eine Schleiftiefe und ein Minimaldurchmesser der Spinnzylinder nach dem Schleifen festgelegt. Wird nun der festgelegte Minimaldurchmesser eines Spinnzylinders bei Abzug der Schleiftiefe von einem in der Messvorrichtung gemessenen Durchmesser rechnerisch unterschritten, entscheidet die Steuerung den Schleifvorgang nicht durchzuführen und die entsprechende Oberwalze in der Ausschussposition durch Lösen der Klemmstelle in den Ausschussbehälter zu überführen.

Alternativ zur vierten Klemmstelle kann eine Aussortierung der nicht mehr zu schleifenden Spinnzylinder bereits nach der Messvorrichtung vor der Übernahmeposition des Revolvers erfolgen. Dazu ist jedoch gegenüber der Lösung mit der vierten Klemmstelle ein weiteres Handlinggerät notwendig, welches die entsprechende Oberwalze aus dem Bearbeitungsmodul ausschleust.

Weiter ist es von Vorteil, wenn der Revolver aus zwei parallel nebeneinander angeordneten Revolverscheiben gebildet ist und die Klemmstellen jeweils einen elektrisch oder pneumatisch betätigten Klemmhebel aufweisen, wobei die Revolverscheiben an ihrem äusseren Umfang jeweils an den Klemmstellen eine Vertiefung aufweisen und der Klemmhebel in einem gespannten Zustand zwischen die Revolverscheiben hineinragt. Die Revolverscheiben sind drehfest auf der Drehachse in einem Abstand voneinander gehalten. Der Abstand ist dabei so gewählt, dass die Spinnzylinder einer sich in der Klemmstelle befindlichen Oberwalze ausserhalb der Revolverscheiben befinden. Die Vertiefungen sind derart angelegt, dass die Achsbolzen der Oberwalzen hineingleiten können und mit dem Klemmhebel anschliessend in der Vertiefung festgeklemmt werden. Der Klemmhebel ist dabei derart zwischen den Revolverscheiben angeordnet, dass ein Drehen des Revolvers um die Drehachse nicht durch die um den Revolver angeordneten Vorrichtungen, wie beispielsweise die Messvorrichtung, Übernahm- und Ausschuss- oder Abgabeführung behindert wird. Der Klemmhebel wird mit einem Klemmantrieb aus einer Klemmstellung in eine Freigabestellung überführt, wobei in der Klemmstellung die Oberwalze ortsfest im Revolver gehalten ist und in der Freigabestellung die Oberwalze nur aufgrund ihrer Lage mit dem Achsbolzen in der Vertiefung liegt oder aus der Vertiefung herausgleitet.

Die Vertiefungen sind in ihrer geometrischen Ausformung derart gestaltet, dass
- in der Übernahmeposition die Oberwalzen ohne ein zusätzliches Handlingsgerät von der Übernahmeführung in die Vertiefung hineingleiten,
- in der Ausschussposition die Oberwalzen ohne ein zusätzliches Handlingsgerät aus der Vertiefung nach Lösen des Klemmhebels auf die Ausschussführung herausgleiten und dem Ausschussbehälter zugeführt werden;
- in der Abgabeposition die Oberwalzen ohne ein zusätzliches Handlingsgerät aus der Vertiefung nach Lösen des Klemmhebels auf die Abgabeführung herausgleiten und dem Abgabemagazin zugeführt werden.

Dadurch, dass gleichzeitig jeweils in der Übernahmeposition eine Oberwalze auf den Revolver aufgebracht, in der Schleifposition die Spinnzylinder einer Oberwalze geschliffen und in der Abgabeposition eine Oberwalze aus dem Revolver entlassen werden, ergibt sich eine Wartezeit zwischen den einzelnen Schleifzyklen nur aus der für eine Drehung des Revolvers um 120 Winkelgrade notwendigen Zeit. Ist zusätzlich eine Ausschussposition vorgesehen verkürzt sich die Wartezeit auf die für eine Drehung des Revolvers um 90 Winkelgrade notwendigen Zeit.

Der Klemmhebel wird mit einem pneumatischen oder elektromotorischen Klemmhebelantrieb von der Klemmstellung in eine Freigabestellung, oder umgekehrt, überführt. In der Freigabestellung ist der Klemmhebel derart aus einem Bereich der Vertiefung herausgeschwenkt, dass ein Hinein- oder Herausgleiten der Oberwalze nicht behindert wird. Dabei kann eine Schwenkbewegung in die Klemmstellung oder in die Freigabestellung auch mit einer Federbelastung erfolgen.

Bevorzugterweise ist der Klemmhebel als ein Schieber mit einem elektrischen oder einem pneumatischen Schieberantrieb ausgebildet. Im Unterschied zum Klemmhebel wird der Schieber linear bewegt und nicht verschwenkt. Durch den Schieber wird die Oberwalze, respektive deren Achsbolzen, mit einer gegen eine Richtung einer notwendigen Haltekraft vertikal ausgeführten Bewegung in die Vertiefung der Klemmstelle gepresst. Eine Rückhaltung der Oberwalze vor einem Herausfallen erfolgt auf diese Weise mechanisch durch den Schieber selbst und nicht wie beim vorgängig beschriebenen Klemmhebel abhängig von einer Schliesskraft des Klemmantriebs. Durch die Ausbildung und Anordnung des Klemmhebels in Form eines Schiebers ist eine geringere Antriebsleistung für einen Schieberantrieb im Vergleich zu einem Klemmantrieb für einen Klemmhebel notwendig. Durch den Schieber ist eine mechanische Blockierung des Achsbolzens unabhängig von einer Kraft des Schieberantriebs in der Vertiefung möglich, wohingegen bei einem Klemmhebel durch den Klemmantrieb eine entsprechende Anpresskraft auf den Achsbolzen ausgeübt wird.

Vorteilhafterweise ist eine Drehung des Revolvers um die Drehachse mit einem elektrischen Antrieb vorgesehen. Ein elektrischer Antriebsmotor kann direkt auf die Drehachse aufgebaut oder mit einem Getriebe mit der Drehachse verbunden sein. Alternativ zu einem elektrischen Antrieb ist eine Drehung des Revolvers um die Drehachse mit einem pneumatischen Antrieb vorgesehen. Dabei kann die Drehung mit einem pneumatischen Zylinder erfolgen, welcher bei jeder Hubbewegung vorwärts den Revolver um eine Position weiterdreht und bei einer Hubbewegung rückwärts vom Revolver abgekoppelt wird, beispielsweise mit einem Klinkenantrieb. Ein elektrischer Antrieb hat gegenüber einem pneumatischen Antrieb den Vorteil, dass ein ruckfreier und gleichmässiger Antrieb des Revolvers möglich ist.

Bevorzugterweise ist der Antrieb über einen Freilauf mit der Drehachse des Revolvers verbunden. Der Revolver ist exakt einer Position in eine nachfolgende Position zu bewegen. Zur Erreichung der gewünschten Position sind Positionierhilfen, beispielsweise entsprechende Anschläge im Stand der Technik üblich. Um mit einem einfachen Antrieb in eine derartige Position fahren zu können, wird durch den Freilauf bei Erreichen der Position eine weitere Übertragung eines Drehmomentes auf die Drehachse auch bei laufendem Drehantrieb unterbunden. Alternativ zu einem Freilauf in Verbindung mit einer mechanischen Positionierung kann ein Drehantrieb in Form eines Schrittmotors verwendet werden. Durch den Schrittmotor ist es möglich die Drehachse und damit den Revolver um einen notwendigen Teil einer Umdrehung zu bewegen.

Weiter ist es von Vorteil, wenn eine Bremse zur Bremshemmung der Drehachse vorgesehen ist. Durch eine permanente Bremshemmung der Drehachse des Revolvers wird eine gleichmässige und ruhige Bewegung des Revolvers erreicht. Eine abrupte Bewegung der Drehachse durch ein Einsetzen des Freilaufs sowie aufgrund eines Anfahrens auftretende Anlaufbeschleunigungen werden vermieden und es entstehen keine Pendelbewegungen der Drehachse aufgrund eines Stoppens des Antriebs.

Vorteilhafterweise sind an der Drehachse eine drehfest angebrachte Positionierscheibe und am Bearbeitungsmodul ein beweglicher Positionierstift vorgesehen, wobei die Positionierscheibe entsprechend der Anzahl Klemmstellen des Revolvers Einschnitte aufweist und ein Einbringen des Positionierstifts in den Einschnitt durch einen elektrischen oder pneumatischen Positionierantrieb vorgesehen ist. Durch die Verwendung einer Positionierscheibe kann für den Drehantrieb des Revolvers ein einfacher elektrischer Antrieb verwendet werden und die Positionierung des Revolvers, respektive der in den Klemmstellen befindlichen Oberwalzen, kann mit einer hohen Genauigkeit wiederholt werden. Durch die mechanische Positionierung über den Positionierstift werden Antriebstoleranzen oder sich summierende Ungenauigkeiten von sensorischen Elementen ausgeschaltet. Vor einer Drehung des Revolvers wird der Positionierstift mit dem Positionierantrieb, beispielsweise einem pneumatischen Zylinder, aus dem Einschnitt herausgefahren. Sobald der Revolver die neue Position ungefähr erreicht, wird der Positionierstift in den Einschnitt hinein verfahren und der Revolver positioniert.

Bevorzugterweise ist der Positionierstift mit einer drehbar gehaltenen Positionierrolle versehen und die Einschnitte in Form eines Prismas mit konisch zulaufenden Schrägflächen ausgebildet. Durch die Verwendung einer Positionierrolle wird bei einem Auftreffen der Positionierrolle auf eine Oberfläche des Einschnittes, im Gegensatz zu einem einfachen Positionierstift, ein mechanischer Abrieb zwischen dem Positionierstift und dem Einschnitt vermieden. Damit wird auch über eine lange Lebensdauer der Positionierrolle eine gleichbleibende Genauigkeit der Positionierung des Revolvers erreicht. Die Kombination der Positionierrolle mit konisch zulaufenden Schrägflächen des Einschnittes wird bei einem Einfahren der Positionierrolle in den Einschnitt eine sanfte Drehung der Drehachse des Revolvers in die zu erreichende Position ermöglicht.

Vorteilhafterweise ist eine Bewegung der Schleifscheibe relativ zum Revolver vorgesehen. Die Schleifscheibe ist relativ zum Revolver, respektive zur in der Klemmstelle des Revolvers gehaltenen Oberwalze verstellbar ausgeführt. Eine geregelte Zustellung der Schleifscheibe zu den Spinnzylindern der Oberwalze ermöglicht einerseits ein Schleifen von Spinnzylindern mit unterschiedlichen Durchmessern und andrerseits eine exakte Einstellung der vorgewählten Schleiftiefe. Die Verstellung der Schleifscheibe ist vorteilhafterweise mit einem Linearantrieb vorgesehen, welcher eine Verschiebung der Schleifscheibe um wenige hundertstel Millimeter zulässt. Während des Schleifvorganges ist vorteilhafterweise eine Abstützung der Spinnzylinder durch eine Schleifstütze vorzusehen. Sobald eine zu schleifende Oberwalze die Schleifposition erreicht, wird in einer Stützbewegung die Schleifstütze an die Spinnzylinder herangeführt. Die Schleifstütze dient einerseits dazu die durch die Schleifscheibe auf die Spinnzylinder aufgebrachten Schleifkräfte aufzufangen und andrerseits eine durch die Schleifscheib auf die Spinnzylinder übertragene Drehung zu bremsen. Dabei besteht auch die Möglichkeit, dass die Schleifstützen dazu genutzt werden, die Oberwalzen in eine definierte Rotation zu versetzen, um die für einen optimalen Schleifvorgang notwendige Relativgeschwindigkeit zwischen der Schleifscheibe und den Spinnzylindern zu erreichen. Da die Oberwalze in der Klemmstelle mit dem Achsbolzen gehalten ist, sind die auf dem Achsbolzen angebrachten Spinnzylinder frei drehbar. Um einen Schleifvorgang zu ermöglichen, ist eine Geschwindigkeitsdifferenz zwischen den Oberflächen der Schleifscheibe und dem Spinnzylinder herzustellen. Alternativ zur Bewegung der Schleifscheibe gegen die Oberwalze wäre eine entsprechende Bewegung der Klemmstelle des Revolvers relativ zur Schleifvorrichtung. Dies wäre jedoch aufwändiger und würde eine komplizierte Konstruktion einer auf dem Revolver beweglich gehaltenen Klemmstelle erfordern.

Die Zustellung der Schleifvorrichtung an die Spinnzylinder der Oberwalze erfolgt aufgrund des in der Messvorrichtung gemessenen Durchmessers des Spinnzylinders und aufgrund der gewählten Betriebsweise für den geforderten Solldurchmesser oder die geforderte Schleiftiefe. Vorteilhafterweise ist eine Erkennung einer Position der jeweiligen Klemmstelle vorgesehen und eine Beeinflussung der Bewegung der Schleifscheibe durch die sich in einer Schleifposition befindlichen Klemmstelle vorgesehen. Dadurch ist der Schleifmaschine bekannt, welche der drei oder vier Klemmstellen sich aktuell in der Schleifposition befindet. Aufgrund von Fertigungstoleranzen bei den Revolverscheiben und der Positionierscheibe sowie deren drehfeste Befestigung auf der Drehachse des Revolvers ist es nicht möglich, dass alle Klemmstellen in der Schleifposition auf wenige Bruchteile von Millimeter genau denselben Abstand zur Schleifachse aufweisen. Durch ein entsprechendes Ausmessen des Revolvers und einer bei Inbetriebnahme vorgenommene Eichung der Schleifmaschine, ist in einer Steuerung der Schleifmaschine ein aktueller Abstandswert der relativen Position der Schleifachse und der sich in der Schleifposition befindlichen jeweiligen Klemmstelle bekannt. Die einzelnen Klemmstellen des Revolvers werden durch die Steuerung erkannt. Eine Erkennung kann dabei durch eine entsprechende Sensorik vorgesehen sein, welche beispielsweise einen bei der Klemmstelle vorgesehenen Marker erkennt. Denkbar ist auch eine andere aus dem Stand der Technik bekannte Sensorik oder Erkennungsmöglichkeit, beispielsweise durch eine Rückmeldung des Drehantriebs des Revolvers oder eine einfache Zählung der Bewegungen des Revolvers. Aufgrund dieser konstruktiven Unterschiede zwischen den einzelnen Klemmstellen wird ein Korrekturfaktor in der Zustellung der Schleifscheibe zur Klemmstelle, angepasst an die sich aktuell in der Schleifposition befindliche Klemmstelle, berücksichtigt. Dieses Verfahren ermöglicht ein Schleifen der einzelnen Spinnzylinder mit einer hohen Genauigkeit, sodass bei einer Vorgabe der Schleiftiefe keine Sicherheiten eingerechnet werden müssen. Dadurch können die Spinnzylinder mit einer geringeren Schleiftiefe bearbeitet werden und in der Folge auch öfter geschliffen werden, bevor ihr minimaler Durchmesser erreicht wird. Dies wirkt sich in einer höheren Lebensdauer der Spinnzylinder aus und somit in einer entsprechenden Reduzierung der Betriebskosten der faserverarbeitenden Maschine.

Bevorzugterweise weist das Bearbeitungsmodul zwei parallel nebeneinander angeordnete Revolver auf. Durch die Verdoppelung der Revolver wird die Kapazität der Schleifmaschine ebenfalls verdoppelt. Bevorzugterweise sind die die beiden Revolver auf einer gemeinsamen Drehachse angeordnet, wodurch nur eine Positionierscheibe notwendig ist. Entsprechend werden die Zuführungen aus dem Vorlagemagazin ebenfalls doppelt ausgeführt.

In einer Weiterentwicklung der Schleifmaschine sind das Vorlagemagazin und das Abgabemagazin auf Transportrollen gelagert und eine Kupplung zur Verbindung mit dem Bearbeitungsmodul vorgesehen. Durch eine Ausrüstung des Vorlagemagazins mit Transportrollen kann dieses direkt an der faserverarbeitenden Maschine mit den zu schleifenden Oberwalzen bestückt werden. Ebenfalls können die fertig geschliffenen Oberwalzen, ohne aus dem Abgabemagazin entnommen werden zu müssen, zum Einsatzort verbracht werden. Als eine Alternative zur Gestaltung des Abgabemagazins kann dieses als ein einfacher mit Laufrollen ausgerüsteter Containerwagen gestaltet werden. Der Containerwagen beinhaltet bevorzugterweise einen um eine Behälterachse angeordneten rotationssymmetrischen und trichterförmigen Behälter. Der Trichter kann dabei durch ebne oder gekrümmte Wände gebildet werden. Eine innere Oberfläche des Behälters, welche nach unten konisch zuläuft, ist durch parallel zur Behälterachse angeordnete Rippen in Segmente unterteilt. Durch diese Unterteilung wird eine schonendere Stapelung der Oberwalzen im Behälter erreicht. Weiter kann die innere Oberfläche des Behälters mit einer Beschichtung zur Dämpfung des Auftreffens der Oberwalzen, beispielsweise einen Kunststoff- oder Gummibelag oder einen dämpfenden Anstrich, versehen sein. Alternativ kann der Behälter aus einem entsprechenden Kunststoff gefertigt sein. Durch einen Antrieb wird der Behälter um die Behälterachse kontinuierlich bewegt. Dadurch wird eine Verteilung der in den Behälter abgegebenen Oberwalzen über einen gesamten Umfang des trichterförmigen Behälters erreicht. Eine Energieversorgung des Containerwagens kann über eine einfache Steckverbindung mit dem Behandlungsmodul hergestellt werden, wodurch der Containerwagen respektive der Behälterantrieb kontinuierlich mit Energie versorgt wird, sobald die Schleifmaschine in Betrieb ist. Für bestimmte Anwendungen kann ein Abgabemagazin mit einem um eine Behälterachse angeordneten rotationssymmetrischen und trichterförmigen Behälter der hierin beschriebenen Art auch stationär verwendet werden. Ein derartiges Ausgabemagazin kann also muss aber nicht zwingend Laufrollen oder andere einen Transport des Abgabemagazin vereinfachenden Einrichtungen aufweisen.

Im Folgenden wird die Erfindung anhand von einer beispielhaften Ausführungsform erklärt und durch die Zeichnung näher erläutert.
- Figur 1: zeigt in schematischer Darstellung eine Oberwalze nach dem Stand der Technik;
- Figur 2: zeigt in schematischer Darstellung eine erste Ausführungsform einer Schleifmaschine;
- Figur 3: zeigt in schematischer Darstellung eine zweite Ausführungsform einer Schleifmaschine;
- Figur 4: zeigt in schematischer Darstellung einen Querschnitt an der Stelle X-X der Figur 3;
- Figur 5: zeigt eine schematische Schnittdarstellung an der Stelle Y-Y der Figur 4;
- Figur 6: zeigt in schematischer Darstellung eine Ansicht aus Richtung Z der Figur 4;
- Figur 7: zeigt in schematischer Darstellung eine dritte Ausführungsform einer Schleifmaschine und
- Figur 8: zeigt in schematischer Darstellung eine vierte Ausführungsform einer Schleifmaschine.

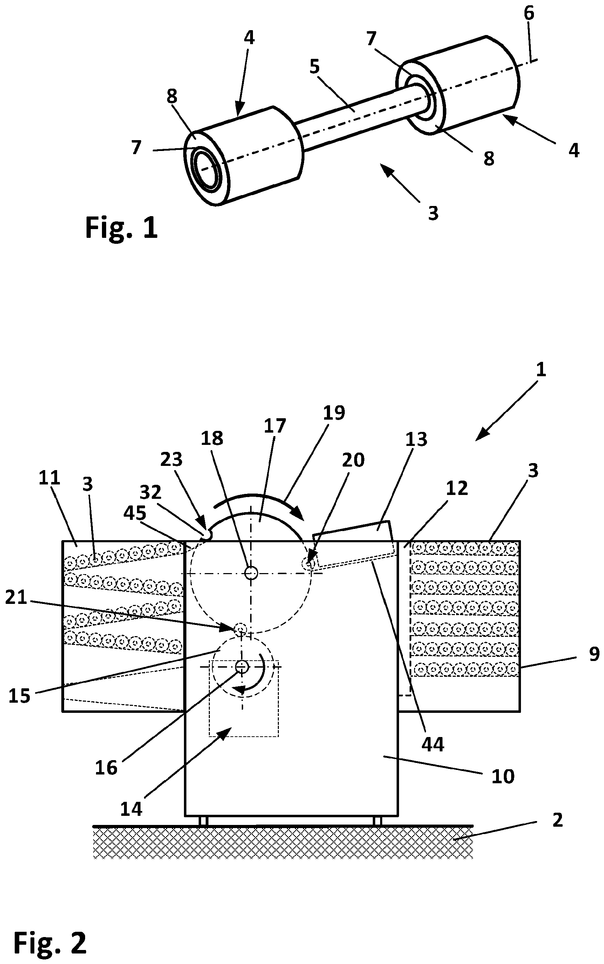

Figur 1 zeigt in schematischer Darstellung eine Oberwalze 3 nach dem Stand der Technik mit zwei Spinnzylindern 4. Die Oberwalze 3 weist einen Achsbolzen 5 mit einer Achse 6 auf, an dessen jeweiligen Enden ein Spinnzylinder 4 gehalten ist. Die Spinnzylinder 4 sind dabei drehbar auf dem Achsbolzen 5 und in Richtung der Achse 6 ortsfest gelagert. Die Spinnzylinder weisen jeweils eine Hülse 7 und einen auf die Hülse 7 aufgetragenen Bezug 8 auf.

Figur 2 zeigt in schematischer Darstellung eine erste Ausführungsform einer Schleifmaschine 1 mit einem Vorlagemagazin 9, einem Bearbeitungsmodul 10 und einem Abgabemagazin 11. Die Schleifmaschine 1 ist beispielhaft mit dem Bearbeitungsmodul 10 auf einem Fundament 2 aufgebaut und das Vorlagemagazin 9 und das Abgabemagazin 11 sind an das Bearbeitungsmodul 10. Im Vorlagemagazin 9 sind zu schleifende Oberwalzen 3 in mehreren Etagen vorgehalten. Das Bearbeitungsmodul 10 weist einen auf einer Drehachse 18 gehaltenen Revolver 17 zur Aufnahme der Oberwalzen 3 auf. Dabei sind am Revolver 17 auf dessen äusserem Umfang in einem gleichmässigen Abstand drei Klemmstellen 32 vorgesehen. Weiter ist im Bearbeitungsmodul eine Schleifvorrichtung 14 mit einer Schleifscheibe 15 vorgesehen. Die Schleifscheibe 15 ist um eine Schleifachse 16 drehbar angeordnet. Aus den einzelnen Etagen des Vorlagemagazins 9 werden die Oberwalzen 3 mit einer Hebevorrichtung 12 zu einer Übergabezuführung 44 gebracht. Über die Übergabezuführung 44 gelangen die Oberwalzen 3 in eine Übernahmeposition 20. Zwischen dem Vorlagemagazin 9 und der Übergabeposition 20 ist eine Messvorrichtung 13 angeordnet. Die Oberwalzen 3 durchlaufen die Messvorrichtung 13, in welcher ein Durchmesser der Spinnzylinder der Oberwalzen 3 gemessen wird. In der Übernahmeposition 20 wird die Oberwalze 13 vom Revolver 17 in einer seiner Klemmstellen 32 übernommen und in dieser arretiert.

Nach einer Drehung des Revolvers 17 mit der Drehachse 18 in einer Drehrichtung 19 um 120 Grad erreicht die in der Übernahmeposition 20 auf dem Revolver 17 arretierte Oberwalze 3 eine Schleifposition 21. Der Revolver 17 wird in dieser Stellung gehalten und die Spinnzylinder der Oberwalze 3 in der Schleifposition 21 durch Zustellung der Schleifscheibe 15 an die Oberwalze 3 geschliffen. Während der Zeit des Schleifens wird an er Übernahmeposition 20 eine nächste Oberwalze 3 aus dem Vorlagemagazin 9 in die Klemmstelle 32 des Revolvers 17 überführt. Nach Beenden des Schleifens und der Übernahme der weiteren Oberwalze 3 wird der Revolver 17 um weitere 120 Winkelgrade in Drehrichtung 19 gedreht. Dadurch erreicht die weitere übernommene Oberwalze 3 die Schleifposition 21 und die fertig geschliffene Oberwalze 3 gelangt in eine Abgabeposition 23. In der Abgabeposition 23 wird die Oberwalze 3 aus der Klemmstelle 32 freigegeben und erreicht über eine Abgabeführung 45 das Abgabemagazin 11. Das Abgabemagazin 11 ist in der gezeigten Ausführung beispielhaft als ein Rechteckmagazin mit einer Vielzahl von übereinander gestapelten und an ihren Enden verbundenen Führungen ausgebildet. Durch diese Konstruktion rollen die Oberwalzen von der Abgabeführung 45 aufgrund der Schwerkraft bis in die unterste Führung.

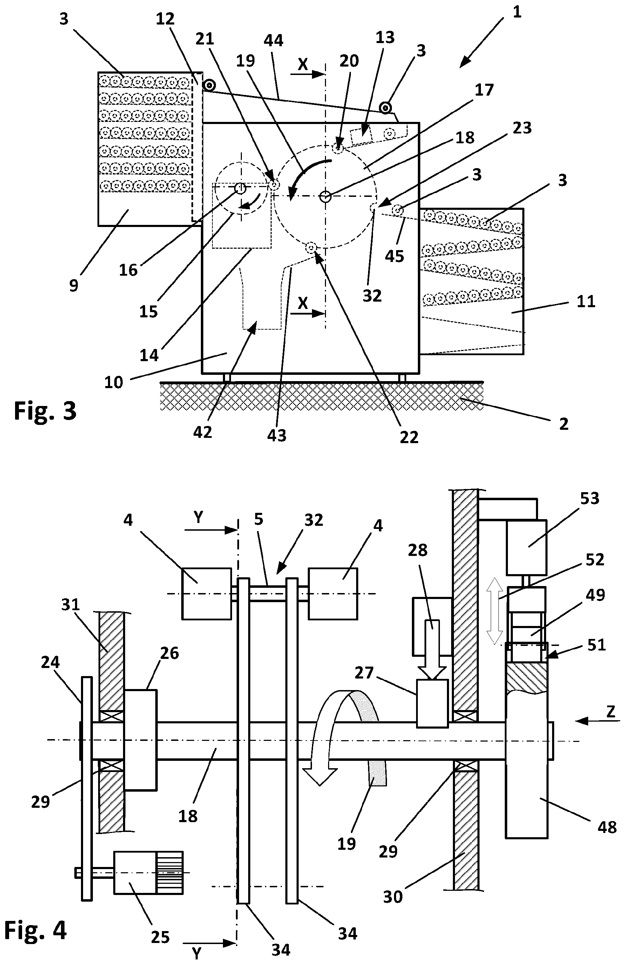

Figur 3 zeigt in schematischer Darstellung eine zweite Ausführungsform einer Schleifmaschine 1 mit einem Vorlagemagazin 9, einem Bearbeitungsmodul 10 und einem Abgabemagazin 11. Die Schleifmaschine 1 ist beispielhaft mit dem Bearbeitungsmodul 10 auf einem Fundament 2 aufgebaut und das Vorlagemagazin 9 und das Abgabemagazin 11 sind an das Bearbeitungsmodul 10 angebaut. Im Vorlagemagazin 9 sind zu schleifende Oberwalzen 3 in mehreren Etagen vorgehalten. Das Bearbeitungsmodul 10 weist einen auf einer Drehachse 18 gehaltenen Revolver 17 zur Aufnahme der Oberwalzen 3 auf. Weiter ist im Bearbeitungsmodul eine Schleifvorrichtung 14 mit einer Schleifscheibe 15 vorgesehen. Die Schleifscheibe 15 ist um eine Schleifachse 16 drehbar angeordnet. Im Vergleich zur Ausführungsform nach Figur 2 sind der Revolver 17, die Schleifvorrichtung 14 sowie das Vorlagemagazin 9 und das Abgabemagazin 11 unterschiedlich angeordnet. Der Revolver 17 in der gezeigten Ausführungsform weist vier gleichmässig über den äusseren Umfang angeordnete Klemmstellen 32 auf. Im Vorlagemagazin 9 sind zu schleifende Oberwalzen 3 in mehreren Etagen vorgehalten. Aus den einzelnen Etagen des Vorlagemagazins 9 werden die Oberwalzen 3 mit einer Hebevorrichtung 12 zu einer Übergabezuführung 44 gebracht. Über die Übergabezuführung 44 gelangen die Oberwalzen 3 in eine Übernahmeposition 20. Zwischen dem Vorlagemagazin 9 und der Übergabeposition 20 ist eine Messvorrichtung 13 angeordnet. Die Oberwalzen 3 durchlaufen die Messvorrichtung 13, in welcher ein Durchmesser der Spinnzylinder der Oberwalzen 3 gemessen wird. In der Übernahmeposition 20 wird die Oberwalze 13 vom Revolver 17 in einer seiner Klemmstellen 32 übernommen und in dieser arretiert. Analog der ersten Ausführungsform wird der Revolver in der Drehrichtung 19 um 90 Winkelgrade gedreht und die übernommene Oberwalze erreicht die Schleifposition 21. Nach einer weiteren Drehung des Revolvers 17 um 90 Winkelgrade erreicht die Oberwalze 3 eine Ausschussposition 22. In der Ausschussposition 22 werden Oberwalzen 3 welche durch die Messvorrichtung 13 als nicht schleifbar taxiert wurden durch eine Freigabe der Klemmstelle 32 über eine Ausschussführung 43 in einen Ausschussbehälter 42 übergeben. Nach einer weiteren Drehung des Revolvers 17 um 90 Winkelgrade erreicht die Oberwalze 3 eine Abgabeposition 23, falls die Oberwalze 3 in der Ausschussposition 22 nicht in den Ausschussbehälter 42 ausgegeben wurde. In der Abgabeposition 23 wird die Oberwalze 3 aus der Klemmstelle 32 freigegeben und erreicht über eine Abgabeführung 45 das Abgabemagazin 11. Das Abgabemagazin 11 ist in der gezeigten Ausführung beispielhaft wie in Figur 2 als ein Rechteckmagazin dargestellt.

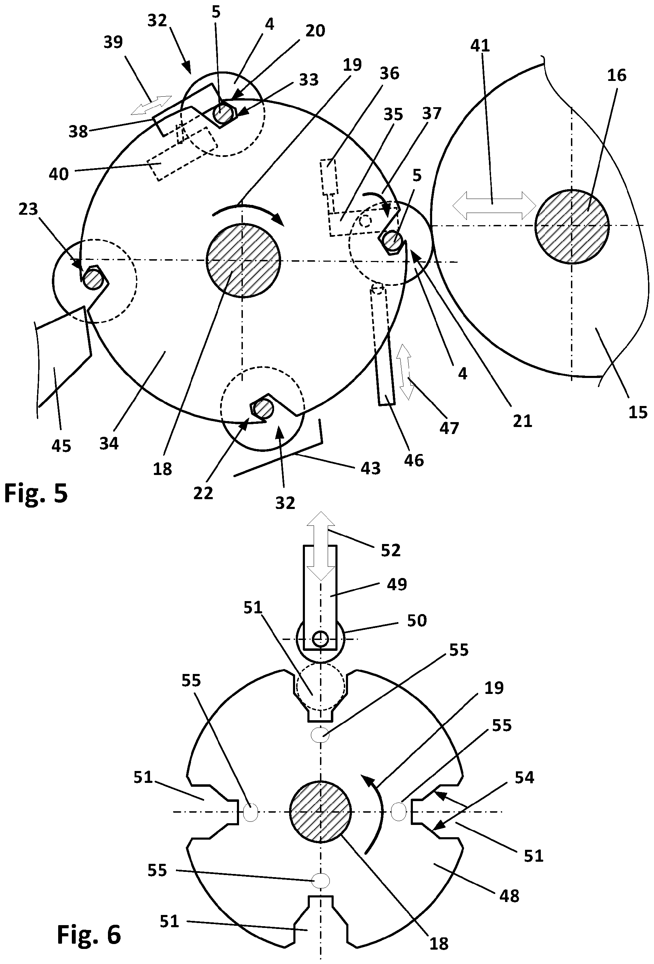

Figur 4 zeigt in schematischer Darstellung einen Querschnitt an der Stelle X-X der Figur 3. Die Drehachse 18 ist in Seitenschilden 30 und 31 jeweils mit Lagern 29 drehbar gehalten. Die Seitenschilde 30 und 31 sind im Bearbeitungsmodul 10 eingebaut oder bilden eine Seitenwand des Bearbeitungsmoduls 10. Der Revolver ist in Form von zwei Revolverscheiben 34 auf der Drehachse 18 drehfest gehalten. An einem äusseren Umfang der Revolverscheiben 34 sind Klemmstellen 32 vorgesehen (siehe auch Figur 5). In der Klemmstelle 32 ist eine Oberwalze bestehend aus zwei mit einem Achsbolze 5 miteinander verbundene Spinnzylindern 4 gehalten. Die Drehachse 18 ist über einen Freilauf 26 mit einem Drehantrieb 24 verbunden. Durch einen Antriebsmotor 25 wird über den Drehantrieb 24 und den Freilauf 26 die Drehachse 18 in einer Drehrichtung 19 bewegt. Am Seitenschild 30 ist eine Bremse 27 angeordnet, welche eine Bremskraft 28 auf die Drehachse 18 ausübt. Weiter ist an der Drehachse 18 eine Positionierscheibe 48 drehfest gehalten. Die Positionierscheibe 48 weist an ihrem Umfang Einschnitte 51 auf. Am Seitenschild 30 ist ein Positionierantrieb 53 befestigt mit welchem mit einer Positionierbewegung 52 ein Positionierstift 49 in den Einschnitt 51 in der Positionierscheibe 48 eingeführt wird.

Figur 5 zeigt eine schematische Schnittdarstellung an der Stelle Y-Y der Figur 4. Die Revolverscheiben 34 sind auf der Drehachse 18 drehfest gehalten und weisen vier Klemmstellen 32 auf. Die Klemmstellen 32 befinden sich in der Übernahmeposition 20, der Schleifposition 21, der Ausschussposition 22 und der Abgabeposition 23. An den vier Klemmstellen 32 weist die Revolverscheibe 34 jeweils eine Vertiefung 33 auf. In der Vertiefung 33 ist eine Oberwalze mit ihrem Achsbolzen 5 eingelegt, wobei der Achsbolzen 5 parallel zur Drehachse 18 angeordnet ist. Die mit dem Achsbolzen 5 verbundenen Spinnzylinder 4 sind somit vor und hinter den Revolverscheiben 34 angeordnet. In der Übernahmeposition 20 ist beispielhaft ein Schieber 38 dargestellt. Der Schieber 38 wird durch einen Schieberantrieb 40 mit einer Schieberbewegung 39 über den Achsbolzen 5 bewegt, wodurch der Achsbolzen 5 und damit der Spinnzylinder 4 in der Klemmstelle 32, respektive der Vertiefung 33, der Revolverscheiben 34 fixiert wird. In der Schleifposition 21 ist beispielhaft eine Befestigung des Spinnzylinders 4 mit einem Klemmhebel 35 dargestellt. Der Klemmhebel 35 wird dabei durch einen Klemmantrieb 36 mit einer Klemmbewegung 37 über den sich in der Vertiefung 33 befindlichen Achsbolzen 5 geschwenkt, wodurch der Spinnzylinder 4 in der Vertiefung 33 fixiert wird.

In der Ausschussposition 22 ist unterhalb der Klemmstelle 32 eine Ausschussführung 43 vorgesehen. Nach Lösen der Klemmstelle 32 in der Ausschussposition gelangt die Oberwalze über die Ausschussführung43 in einen Ausschussbehälter 42 (siehe Figur 5). In der Abgabeposition 23 ist eine Abgabeführung 45 derart angeordnet, dass nach Lösen der Klemmung der Oberwalze diese aus der Vertiefung 33 über die Abgabeführung 45 zum Abgabemagazin 11 geführt wird (siehe Figur 5).

Weiter ist eine Schleifscheibe 15 auf einer Schleifachse 16 vorgesehen. Über eine Schleifzustellung 41 wird der sich in der Schleifposition 21 befindliche Spinnzylinder 4 auf einen vorbestimmten Durchmesser geschliffen. Zur Unterstützung des Schleifprozesses ist eine Schleifstütze 46 vorgesehen. Die Schleifstütze 46 wird mit einer Stützbewegung 47 an den Spinnzylinder 4 herangeführt. Nach Beenden des Schleifens wird die Schleifstütze 46 aus einem Schwenkbereich der Revolverscheiben 34 herausbewegt. Nach jedem Schleifzyklus wird die Drehachse 18 und damit die Revolverscheiben 34 um 90 Winkelgrade in der Drehrichtung 19 bewegt, wodurch die von den Revolverscheiben 34 gehaltenen Spinnzylinder 4 um eine Position weitertransportiert werden.

Figur 6 zeigt in schematischer Darstellung eine Ansicht der Positionierscheibe 48 aus Richtung Z der Figur 4. Die Positionierscheibe 48 weist vier über den Umgang gleichmässig angeordnete Einschnitte 51 auf und ist auf der Drehachse 18 drehfest gehalten. Die Einschnitte sind in Form eines Prismas mit konisch zulaufenden Schrägflächen 54 ausgebildet. Ein Positionierstift 49, an dessen an einem der Positionierscheibe 48 zugewandten Ende eine Positionierrolle 50 drehbar gehalten ist, wird mit einer Positionierbewegung 52 gegen die Drehachse 18 in den Einschnitt 51 abgesenkt. Die Positionierrolle 50 kommt dabei mit den Schrägflächen 54 in Berührung, was zu einer exakten Positionierung der Positionierscheibe 48 führt (gestrichelte Darstellung der Positionierrolle). Der Positionierstift 49 ist mit der Freiheit der Positionierbewegung 52 ortsfest in der Schleifmaschine gehalten. Nach Beenden eines Schleifzyklus wird die Positionierrolle 50 aus dem Einschnitt 51 herausbewegt und anschliessend die Drehachse 18 mit der Positionierscheibe 48 um 90 Winkelgrade in der Drehrichtung 19 bewegt. Durch die Anordnung der Einschnitte 51 in der Positionierscheibe 48 ergibt sich eine genaue Bewegung der im Revolver gehaltenen Oberwalzen von einer Arbeitsposition in die Nächste. Die einzelnen Einschnitte 51 in der Positionsscheibe 48 sind mit einem Marker 55 versehen. Aufgrund dieses Markers 55 ist einer Steuerung bekannt, welche Klemmstelle des Revolvers sich in der Schleifposition befindet.

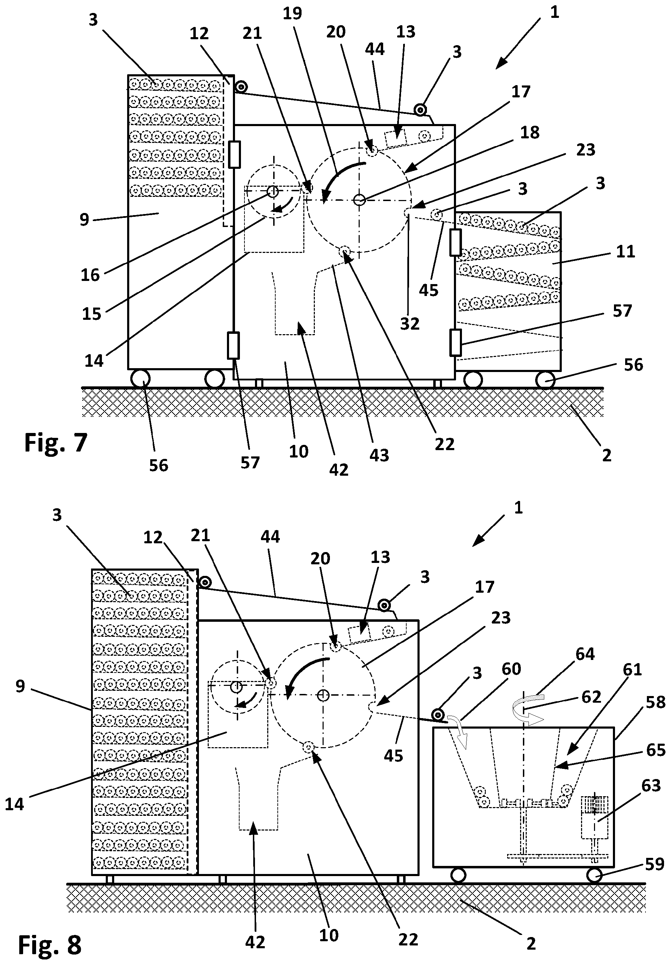

Figur 7 zeigt in schematischer Darstellung eine dritte Ausführungsform einer Schleifmaschine 1 mit einem Vorlagemagazin 9, einem Bearbeitungsmodul 10 und einem Abgabemagazin 11. Das Bearbeitungsmodul 10 entspricht der zweiten Ausführungsform nach Figur 3. Für eine Beschreibung des Bearbeitungsmoduls 10 wird deshalb auf die Figur 3 verwiesen. Im Vorlagemagazin 9 sind zu schleifende Oberwalzen 3 in mehreren Etagen vorgehalten. Aus den einzelnen Etagen des Vorlagemagazins 9 werden die Oberwalzen 3 mit einer Hebevorrichtung 12 zu einer Übergabezuführung 44 gebracht. Über die Übergabezuführung 44 gelangen die Oberwalzen 3 in eine Übernahmeposition 20. Das Vorlagemagazin 9 weist Transportrollen 56 und Kupplungen 57 auf. Mit den Kupplungen 56 wird das Vorlagemagazin 9 mit dem Bearbeitungsmodul 10 mechanisch und elektrisch und wenn notwendig pneumatisch verbunden. Bei verbundenem Vorlagemagazin 9 können alle notwendigen Funktionen, wie beispielsweise die Hebevorrichtung 12, durch die Steuerung der Schleifmaschine 1 ausgeführt werden. Nach Lösen der Kupplung 57 kann das Vorlagemagazin 9 auf den Transportrollen 56 vom Bearbeitungsmodul 10 wegbewegt werden.

In der Abgabeposition 23 wird die Oberwalze 3 aus der Klemmstelle 32 freigegeben und erreicht über eine Abgabeführung 45 das Abgabemagazin 11. Das Abgabemagazin 11 ist in der gezeigten Ausführung als ein Rechteckmagazin dargestellt und weist ebenfalls Transportrollen 56 und Kupplungen 57 auf. Mit den Kupplungen 56 wird das Abgabemagazin 11 mit dem Bearbeitungsmodul 10 mechanisch und elektrisch und wenn notwendig pneumatisch verbunden. Bei verbundenem Abgabemagazin 10 können alle notwendigen Funktionen durch die Steuerung der Schleifmaschine 1 ausgeführt werden. Nach Lösen der Kupplung 57 kann das Abgabemagazin 11 auf den Transportrollen 56 vom Bearbeitungsmodul 10 wegbewegt werden.

Figur 8 zeigt in schematischer Darstellung eine vierte Ausführungsform einer Schleifmaschine 1 mit einem Vorlagemagazin 9, einem Bearbeitungsmodul 10 und einem Containerwagen 58. Das Bearbeitungsmodul 10 entspricht der zweiten Ausführungsform nach Figur 3. Für eine detaillierte Beschreibung des Bearbeitungsmoduls 10 wird deshalb auf die Figur 3 verwiesen. Im fest mit dem Bearbeitungsmodul 10 verbundenen Vorlagemagazin 9 sind zu schleifende Oberwalzen 3 in mehreren Etagen vorgehalten. Aus den einzelnen Etagen des Vorlagemagazins 9 werden die Oberwalzen 3 mit einer Hebevorrichtung 12 zu einer Übergabezuführung 44 gebracht. Über die Übergabezuführung 44 gelangen die Oberwalzen 3 in die Messvorrichtung 13 und anschliessend in die Übernahmeposition 20 des Revolvers 17. Durch eine Vierteldrehung des Revolvers 17 wird die Oberwalze 3 in die Schleifposition 21 gebracht und durch die Schleifvorrichtung 14 bearbeitet. Durch eine weitere Vierteldrehung des Revolvers 17 gelangt die Oberwalze 3 in eine Ausschussposition 22, an welcher bei Bedarf eine Abgabe der Oberwalze 3 in einen Ausschussbehälter 42 möglich ist. In der durch eine weitere Vierteldrehung des Revolvers 17 erreichte Abgabeposition 23 wird die Oberwalze 3 aus dem Revolver 17 freigegeben und erreicht über eine Abgabeführung 45 den Containerwagen 58. Der Containerwagen 58 ist mit Laufrollen 59 ausgerüstet. Von der Abgabeführung 45 fällt die Oberwalze 3 selbständig in Pfeilrichtung 60 in einen konisch ausgeformten Behälter 61. Der Behälter 61 ist im Containerwagen 58 in einer Behälterachse 62 drehbar gehalten und wird durch einen Behälterantrieb 63 um die Behälterachse 62 mit einer langsamen Geschwindigkeit in Rotationsrichtung 64 bewegt. Eine innere Oberfläche des Behälters 61 ist durch Rippen 65 in einzelne Segmente unterteilt.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Legende

- 1: Schleifmaschine
- 2: Fundament
- 3: Oberwalze
- 4: Spinnzylinder
- 5: Achsbolzen
- 6: Achse
- 7: Hülse
- 8: Bezug
- 9: Vorlagemagazin
- 10: Bearbeitungsmodul
- 11: Abgabemagazin
- 12: Hebevorrichtung
- 13: Messvorrichtung
- 14: Schleifvorrichtung
- 15: Schleifscheibe
- 16: Schleifachse
- 17: Revolver
- 18: Drehachse
- 19: Drehrichtung
- 20: Übernahmeposition
- 21: Schleifposition
- 22: Ausschussposition
- 23: Abgabeposition
- 24: Drehantrieb
- 25: Antriebsmotor
- 26: Freilauf
- 27: Bremse
- 28: Bremskraft
- 29: Lager
- 30: Seitenschild
- 31: Seitenschild
- 32: Klemmstelle
- 33: Vertiefung
- 34: Revolverscheibe
- 35: Klemmhebel
- 36: Klemmantrieb
- 37: Klemmbewegung
- 38: Schieber
- 39: Schieberbewegung
- 40: Schieberantrieb
- 41: Schleifzustellung
- 42: Ausschussbehälter
- 43: Ausschussführung
- 44: Übergabeführung
- 45: Abgabeführung
- 46: Schleifstütze
- 47: Stützbewegung
- 48: Positionierscheibe
- 49: Positionierstift
- 50: Positionierrolle
- 51: Einschnitt
- 52: Positionierbewegung
- 53: Positionieranrieb
- 54: Schrägfläche
- 55: Marker
- 56: Transportrollen
- 57: Kupplung
- 58: Containerwagen
- 59: Laufrollen
- 60: Pfeilrichtung
- 61: Behälter
- 62: Behälterachse
- 63: Behälterantrieb
- 64: Rotationsrichtung
- 65: Rippe

## Patentansprüche

1. Schleifmaschine (1) zum Schleifen von Spinnzylindern (4) einer Oberwalze (3) von faserverarbeitenden Maschinen mit einem Vorlagemagazin (9) und einem Ablagemagazin (11) und einem Bearbeitungsmodul (10), wobei das Bearbeitungsmodul (10) zumindest eine Messvorrichtung (13) und eine Schleifvorrichtung (14) mit zumindest einer Schleifscheibe (15) und einer Schleifachse (16) aufweist, **dadurch gekennzeichnet, dass** im Bearbeitungsmodul (10) zum Transport der Oberwalzen (3) durch das Bearbeitungsmodul (10) ein Revolver (17) mit einer Drehachse (18) vorgesehen ist, wobei die Drehachse (18) des Revolvers (17) parallel zur Schleifachse (16) angeordnet ist und der Revolver (17) an seinem Umfang zumindest drei Klemmstellen (32) zur Arretierung der Oberwalzen (3) am Revolver (17) aufweist.

2. Schleifmaschine (1) nach Anspruch 1, **dadurch gekennzeichnet, dass** die Messvorrichtung (13) zwischen dem Vorlagemagazin (9) und dem Revolver (17) vorgesehen ist.

3. Schleifmaschine (1) nach Anspruch 1 oder 2, **dadurch gekennzeichnet, dass** der Revolver (17) an seinem Umfang vier Klemmstellen (32) aufweist.

4. Schleifmaschine (1) nach zumindest einem der vorangehenden Ansprüche, **dadurch gekennzeichnet, dass** der Revolver (17) aus zwei parallel nebeneinander angeordneten Revolverscheiben (34) gebildet ist und die Klemmstellen (32) jeweils einen elektrisch oder pneumatisch betätigten Klemmhebel (35) aufweisen, wobei die Revolverscheiben (34) an ihrem äusseren Umfang jeweils an den Klemmstellen (32) eine Vertiefung (33) zur Aufnahme der Oberwalzen (3) aufweisen und der Klemmhebel (35) in einem gespannten Zustand zwischen die Revolverscheiben (34) hineinragt.

5. Schleifmaschine (1) nach Anspruch 4, **dadurch gekennzeichnet, dass** der Klemmhebel (34) als ein Schieber (38) mit einem elektrischen oder einem pneumatischen Schieberantrieb (40) ausgebildet ist.

6. Schleifmaschine (1) nach zumindest einem der vorangehenden Ansprüche, **dadurch gekennzeichnet, dass** eine Drehung des Revolvers (17) um die Drehachse (18) mit einem elektrischen Drehantrieb (24, 25) vorgesehen ist.

7. Schleifmaschine (1) nach zumindest einem der vorangehenden Ansprüche,
**dadurch gekennzeichnet, dass** eine Drehung des Revolvers (17) um die Drehachse (18) mit einem pneumatischen Antrieb vorgesehen ist.

8. Schleifmaschine (1) nach Anspruch 6 oder 7, **dadurch gekennzeichnet, dass** der Drehantrieb (24) über einen Freilauf (26) mit der Drehachse (18) des Revolvers (17) verbunden ist.

9. Schleifmaschine (1) nach zumindest einem der Ansprüche 6 bis 8, **dadurch gekennzeichnet, dass** eine Bremse (27) zur Bremshemmung der Drehachse (18) des Revolvers (17) vorgesehen ist.

10. Schleifmaschine (1) nach zumindest einem der vorangehenden Ansprüche,
**dadurch gekennzeichnet, dass** an der Drehachse (18) eine drehfest angebrachte Positionierscheibe (48) und am Bearbeitungsmodul (10) ein beweglicher Positionierstift (49) vorgesehen sind, wobei die Positionierscheibe (48) entsprechend der Anzahl Klemmstellen (32) des Revolvers (17) Einschnitte (51) aufweist und ein Einbringen des Positionierstifts (49) in den Einschnitt (51) durch einen elektrischen oder pneumatischen Positionierantrieb (53) vorgesehen ist.

11. Schleifmaschine (1) nach Anspruch 9, **dadurch gekennzeichnet, dass** der Positionierstift (49) mit einer drehbar gehaltenen Positionierrolle (50) versehen ist und die Einschnitte (51) in Form eines Prismas mit konisch zulaufenden Schrägflächen (54) ausgebildet sind.

12. Schleifmaschine (1) nach zumindest einem der vorangehenden Ansprüche,
**dadurch gekennzeichnet, dass** eine Bewegung der Schleifscheibe (15) relativ zum Revolver (17) vorgesehen ist.

13. Schleifmaschine (1) nach Anspruch 12, **dadurch gekennzeichnet, dass** eine Erkennung einer Position (20, 21, 22, 23) der jeweiligen Klemmstelle (32) vorgesehen ist und eine Beeinflussung der Bewegung der Schleifscheibe (15) durch die sich in einer Schleifposition (21) befindlichen Klemmstelle (32) vorgesehen ist.

14. Schleifmaschine (1) nach zumindest einem der vorangehenden Ansprüche,
**dadurch gekennzeichnet, dass** das Bearbeitungsmodul (10) zwei parallel nebeneinander angeordnete Revolver (17) aufweist.

15. Schleifmaschine (1) nach zumindest einem der vorangehenden Ansprüche,
**dadurch gekennzeichnet, dass** das Vorlagemagazin (9) und das Abgabemagazin (11) auf Transportrollen (56) gelagert sind und jeweils eine Kupplung (57) zur Verbindung mit dem Bearbeitungsmodul (10) vorgesehen ist.
